# EUROPÄISCHE PATENTANMELDUNG

(11) **EP 1 522 797 A2**
(43) Veröffentlichungstag der Anmeldung: **13.04.2005**
(21) Anmeldenummer: 04405622.4
(22) Anmeldetag: 05.10.2004
(51) Int. Cl.: F24F 6/04, C04B 38/06

(54) **Keramikplatte zur Befeuchtung eines Luftstroms**

(30) Priorität: 09.10.2003 CH 17222003
(71) Anmelder: Axair AG, 8808 Pfäffikon SZ (CH)
(72) Erfinder: Aepli, Michael, 8646 Wagen (CH); Wulz, Helmut, 8907 Wettswil (CH)
(74) Vertreter: Bollhalder, Renato

(57) **Zusammenfassung**

Eine Keramikplatte (1) zur Befeuchtung eines Luftstroms mit einer Befeuchtungsflüssigkeit weist eine offenporige Struktur aus porösen Keramikwandungen auf, aus der die Befeuchtungsflüssigkeit von dem hindurch strömenden Luftstrom aufgenommen wird. In der Keramikplatte (1) ist mindestens ein sich im Innern der Keramikplatte erstreckender Kanal (13) vorgesehen, der eine direkt durch eine Keramikwandung der offenporigen Struktur gebildete poröse Wandung aufweist. Der Kanal (13) umfasst ausserdem einen Einlass (11) zum Einbringen der Befeuchtungsflüssigkeit in den Kanal (13) und damit ins Innere der Keramikplatte (1).

## Beschreibung

Die Erfindung betrifft eine Keramikplatte zur Befeuchtung eines Luftstroms gemäss dem Oberbegriff des unabhängigen Patentanspruchs 1. Ferner betrifft die Erfindung eine Verdunstungsvorrichtung mit mindestens einer erfindungsgemässen Keramikplatte sowie ein Verfahren zur Herstellung einer erfindungsgemässen Keramikplatte.

Keramikplatten zur Befeuchtung eines Luftstroms, die in Luftbefeuchtern zum Einsatz kommen, sind an sich bekannt. Beispielsweise sind in der DE 203 05 087 U Luftbefeuchter mit Keramikplatten beschrieben, die eine offenporige Struktur aus porösen Keramikwandungen aufweisen. Von dem hindurch strömenden Luftstrom wird die Befeuchtungsflüssigkeit aus dieser Keramikstruktur aufgenommen.

In einem Luftbefeuchter wird einem Luftstrom eine Befeuchtungsflüssigkeit - beispielsweise Wasser - zugeführt. Die Zufuhr des Wassers erfolgt häufig mit Hilfe einer Zerstäubereinheit mit mehreren Düsen, wobei die einzelnen Düsen der Zerstäubereinheit feine Wassertröpfchen in den Luftstrom sprühen. Im Luftstrom verdunstet ein Teil der Wassertröpfchen - sie werden somit in die Luft aufgenommen, wodurch diese befeuchtet wird.

Es verdunsten jedoch nicht alle Tröpfchen, die in den Luftstrom hinein gesprüht werden, sodass ein grosser Teil der Tröpfchen im Luftstrom verbleibt. Aus hygienischen Gründen (z.B. Keime in den Tröpfchen) ist es daher im allgemeinen notwendig, am Ende der Befeuchtungsstrecke einen den Strömungsquerschnitt ausfüllenden Tröpfchenabscheider anzuordnen, z.B. aus Wirrfaservlies, um zu verhindern, dass Aerosole in den nachfolgenden Luftkanal gelangen können.

Keramikplatten kommen nun ebenfalls als Tröpfchenabscheider zum Einsatz, wobei sie nicht nur als Tröpfchenabscheider wirken, sondern auch als Sekundärbefeuchter (Verdunstungsvorrichtung). Tröpfchen, die zunächst aus dem Luftstrom auf den Wandungen der offenporigen Keramikplatte abgeschieden werden, können später wieder im Luftstrom, der durch die offenporige Keramikplatte strömt, verdunstet werden und diesen befeuchten. Die Abwassermenge ist daher bei solchen Luftbefeuchtern insgesamt geringer, weil der grösste Teil der in der Keramikplatte abgeschiedenen Tröpfchen von deren grossen inneren Oberfläche verdunstet und somit nicht als Abwasser anfällt.

Bei diesen Luftbefeuchtern werden nach wie vor die Tröpfchen mit Hilfe der Zerstäubereinheit mit Hilfe mehrerer Düsen in den Luftstrom eingebracht. Diese Zerstäubereinheiten stellen regelmässig einen ganz erheblichen technischen wie auch kostenmässigen Aufwand dar.

Die WO 00/53977 offenbart eine andere Art von Luftbefeuchtern, bei der beispielsweise in einen hydrophilen, offenporigen Körper aus keramischem Material eine technische Rohrmembran eingebettet ist. Über die Rohrmembran wird dem Keramikkörper gefiltertes Wasser zur Befeuchtung der durch den Keramikkörper strömenden Luft zugeführt. Die getrennte Ausbildung von Rohrmembran und Keramikkörper kann jedoch den Wasserübergang behindern.

Der vorliegenden Erfindung liegt daher die Aufgabe zugrunde, den Aufwand bei der Luftbefeuchtung bei optimaler Befeuchtung massgeblich zu reduzieren.

Diese Aufgabe wird erfindungsgemäss durch eine Keramikplatte gelöst, wie sie durch die Merkmale des unabhängigen Patentanspruchs 1 charakterisiert ist. Vorteilhafte Weiterbildungen der erfindungsgemässen Keramikplatte ergeben sich aus den Merkmalen der Patentansprüche 2 bis 6. Ein weiterer Aspekt der Erfindung betrifft eine Verdunstervorrichtung, wie sie durch die Merkmale des Patentanspruchs 7 charakterisiert ist. Vorteilhafte Weiterbildungen der Verdunstungsvorrichtung ergeben sich aus den Merkmalen der Patentansprüche 8 und 9. Schliesslich betrifft ein weiterer Aspekt der Erfindung ein Verfahren zur Herstellung einer erfindungsgemässen Keramikplatte, wie es durch die Merkmale des Patentanspruchs 10 charakterisiert ist. Vorteilhafte Varianten des Verfahrens ergeben sich aus den Merkmalen der Patentansprüche 11 und 12.

Die erfindungsgemässe Keramikplatte zeichnet sich insbesondere dadurch aus, dass in der Keramikplatte mindestens ein sich im Innern der Keramikplatte erstreckender Kanal vorgesehen ist, der eine direkt durch eine Keramikwandung der offenporigen Struktur der Keramikplatte gebildete poröse Wandung sowie einen Einlass zum Einbringen der Befeuchtungsflüssigkeit in den Kanal und damit ins Innere der Keramikplatte aufweist.

Die in den Kanal und damit ins Innere der Keramikplatte zugeführte Befeuchtungsflüssigkeit gelangt durch die poröse Keramik hindurch aus dem Innern der Keramik auf die Oberfläche der Wandungen der offenporigen Struktur, die von dem Luftstrom durchströmt wird. Die Befeuchtungsflüssigkeit kann dann im Luftstrom aufgenommen werden (Verdunstung) und wird somit auf diese Weise direkt über die Keramikplatte dem Luftstrom zugeführt, sodass auf eine separate Zerstäubereinheit (z.B. Düsenanordnung) verzichtet werden kann.

Bei einer vorteilhaften Weiterbildung der Keramikplatte ist im Innern der Keramikplatte eine Vielzahl von Verteiler-Kapillaren vorhanden. Die Verteiler-Kapillaren sind mit dem Kanal verbunden, in welchen die Befeuchtungsflüssigkeit eingebracht wird. Diese Verteiler-Kapillaren dienen dazu, die Befeuchtungsflüssigkeit aus dem Kanal in alle Bereiche der Keramikplatte zu transportieren, auch in die - vom Kanal aus betrachtet - "entlegenen" Bereiche der Keramikplatte. Die Befeuchtungsflüssigkeit kann dann - wie oben bereits beschrieben - durch die poröse Keramik hindurch auf die Oberfläche der Wandungen der offenporigen Struktur gelangen, durch die der Luftstrom hindurch strömt. Dort kann die Befeuchtungsflüssigkeit verdunsten, also im Luftstrom aufgenommen werden und somit den Luftstrom befeuchten.

Bei einer weiteren vorteilhaften Weiterbildung der erfindungsgemässen Keramikplatte weist die offenporige Struktur poröse Wandungen mit einer Dicke im Bereich von 0.1 mm bis 1.5 mm auf, vorzugsweise im Bereich von 0.2 mm bis 0.6 mm. Bei derartigen Dicken können gute Ergebnisse bei der Befeuchtung erreicht werden.

Wiederum bei einer weiteren vorteilhaften Weiterbildung der erfindungsgemässen Keramikplatte weist der Kanal (zusätzlich zum Einlass) auch einen Auslass auf. Durch diesen Auslass kann Befeuchtungsflüssigkeit, die nicht in die Kapillaren gelangt ist bzw. die nicht durch die poröse Keramik hindurch auf die Oberfläche der Wandungen der offenporigen Struktur gelangt ist, wieder abgeführt werden. Auch lässt sich auf diese Weise der Druck im Kanal und/oder in den Kapillaren besser steuern. Ausserdem können mehrere Keramikplatten in Serie geschaltet werden.

Bei einer weiteren vorteilhaften Weiterbildung der erfindungsgemässen Keramikplatte sind im Innern der Keramikplatte mehrere Kanäle vorgesehen. Je nachdem, wie die einzelnen Kanäle verlaufen, kann die Befeuchtungsflüssigkeit dadurch im Innern der Keramikplatte besser in die einzelnen Bereiche der Keramikplatte gelangen. Ausserdem ist es mit mehreren Kanälen auch besser möglich, die Menge an Befeuchtungsflüssigkeit zu steuern, die auf die Oberfläche der Wandungen der offenporigen Struktur gelangt.

Der Kanal bzw. die Kanäle können mäanderförmig im Innern der Keramikplatte verlaufen. Ein solcher mäanderförmiger Verlauf des Kanals bzw. der Kanäle ist insofern vorteilhaft, als es praktisch keine Bereiche der Keramikplatte gibt, die einen grossen Abstand zum Kanal aufweisen, sodass eine gute Verteilung der Befeuchtungsflüssigkeit erreicht werden kann, d.h. eine homogene Befeuchtung der gesamten Keramikstruktur.

Was die Verdunstervorrichtung betrifft, so erstreckt sich eine solche Verdunstervorrichtung zumindest grösstenteils über den Strömungsquerschnitt der Befeuchtungsstrecke, beispielsweise eines Luftkanals. Die Vorrichtung weist ein oder mehrere Verdunsterelemente auf, wobei die einzelnen Verdunsterelemente jeweils mindestens eine Keramikplatte umfassen, wie sie vorstehend beschrieben ist.

Vorzugsweise ist mindestens eines der Verdunsterelemente in eine den Strömungsquerschnitt der Befeuchtungsstrecke mindestens teilweise freigebende Position verstellbar. Wenn die Luft nicht befeuchtet werden soll, wird auch kein Verdunsterelement benötigt. Das Verdunsterelement bzw. die Verdunsterelement können dann in eine den Strömungsquerschnitt freigebende Position verstellt werden. Dadurch wird der Strömungswiderstand reduziert, was die Energiekosten für den Betrieb der Klimaanlage verringert.

Bei einer Weiterbildung der erfindungsgemässen Verdunstervorrichtung sind mehrere Verdunsterelemente zwischen einer V-förmigen, den Strömungsquerschnitt ausfüllenden Anordnung und einer Anordnung verstellbar, in der die einzelnen Verdunsterelemente zur Strömungsrichtung des Luftstroms parallel ausgerichtet sind. Dies ist eine besonders praktische Möglichkeit, wie einerseits die Verdunsterelemente so angeordnet werden können, dass der Strömungsquerschnitt komplett abgedeckt ist, der Luftwiderstand aber nicht beliebig hoch ist, und dennoch der gesamte Luftstrom durch die Verdunsterelemente strömt. Diese Position ist z.B. dann von Vorteil, wenn der Luftstrom möglichst intensiv befeuchtet werden soll. Andererseits können die Verdunsterelemente so angeordnet werden, dass sie dem Luftstrom einen sehr geringen Widerstand entgegensetzen. Diese Position ist z.B. dann von Vorteil, wenn keine Befeuchtung des Luftstroms erfolgen soll.

Alternativ können die Verdunsterelemente selbstverständlich auch so angeordnet werden, dass die Keramikplatten senkrecht zur Luftströmungsrichtung stehen.

Was das erfindungsgemässe Verfahren zur Herstellung der erfindungsgemässen, bereits weiter oben beschriebenen Keramikplatte betrifft, so wird zwischen mehrere Teile aus einem offenporigen Schaum ein Platzhalter für einen Kanal eingelegt (z.B. ein Plastikschlauch, eine Schaumstoffschnur oder eine pastöse Raupe aus einem verbrennbaren Material). Die Teile aus dem offenporigen Schaum werden dann derart zusammengefügt, dass sie den Platzhalter für den Kanal umschliessen. Sodann wird auf die Wandungen des offenporigen Schaums und auf die Aussenfläche des Platzhalters für den Kanal ein Keramikrohmaterial, beispielsweise in Form einer Keramiksuspension, aufgebracht. Schliesslich wird der offenporige Schaum zusammen mit dem Platzhalter für den Kanal während des Brennens der Keramik bei vorzugsweise über 1000°C verdampft und so die Keramikplatte gebildet. Die zum Verdampfen des offenporigen Schaums zugeführte Wärme dient dabei nicht nur dazu, den Schaum zu verdampfen, sondern auch dazu, dass das aufgebrachte Keramikrohmaterial aushärtet. Dieses Verfahren erlaubt eine einfache, technisch gut beherrschbare Herstellung der erfindungsgemässen Keramikplatte.

Bei einer Variante des erfindungsgemässen Verfahrens ist der offenporige Schaum ein elastischer Polymerschaum. Die Keramikrohmasse wird bei dieser Variante auf die Wandungen des Polymerschaums und auf die Aussenfläche des Platzhalters für den Kanal aufgebracht, indem der elastische Polymerschaum zwischen zwei Walzen transportiert wird und dabei zwischen den Walzen zusammengedrückt wird, wodurch das Keramikrohmaterial, z.B. in Form einer Keramiksuspension, in den Polymerschaum hineingepresst und so auf die Wandungen des Schaums sowie auf die Aussenfläche des Platzhalters für den Kanal aufgebracht wird. Dadurch lässt sich ein gutes Auftragen des Keramikrohmaterials auf die Wandungen des Polymerschaums sowie auf die Aussenfläche des Platzhalters für den Kanal erreichen.

Alternativ kann der elastische Polymerschaum in eine Keramiksuspension getaucht, anschliessend gewalkt und schliesslich durch Durchführen und Zusammendrücken zwischen zwei Walzen von überschüssiger Keramiksuspension befreit werden. Auch auf diese Weise kann das Keramikrohmaterial effizient auf die Wandungen des Polymerschaums sowie auf die Aussenfläche des Platzhalters aufgebracht werden.

Weitere vorteilhafte Weiterbildungen und Varianten ergeben sich aus der nachfolgenden Beschreibung von Ausführungsbeispielen mit Hilfe der Zeichnung. Es zeigen:
- Fig. 1 -: eine Aufsicht auf ein Ausführungsbeispiel einer erfindungsgemässen Keramikplatte,
- Fig. 2 -: einen Längsschnitt durch die Keramikplatte aus Fig. 1,
- Fig. 3 -: einen Schnitt entsprechend der Linie III-III aus Fig. 2,
- Fig. 4 -: einen Schnitt entsprechend der Linie IV-IV aus Fig. 2,
- Fig. 5 -: einen Längsschnitt durch ein weiteres Ausführungsbeispiel der erfindungsgemässen Keramikplatte,
- Fig. 6 -: einen Längsschnitt durch ein weiteres Ausführungsbeispiel der erfindungsgemässen Keramikplatte,
- Fig. 7, 8 -: jeweils einen Ausschnitt aus einer Wandung der porösen Keramikstruktur der offenporigen Keramikplatte,
- Fig. 9 -: einen Verfahrensschritt bei der Herstellung der erfindungsgemässen Keramikplatte,
- Fig. 10 -: einen weiteren Verfahrensschritt bei der Herstellung der erfindungsgemässen Keramikplatte,
- Fig. 11 -: einen Ausschnitt aus dem Polymerschaum mit dem eingelegten Platzhalter für den Kanal, bereits mit Keramikrohmaterial beschichtet,
- Fig. 12 -: den Ausschnitt aus Fig. 11, wobei der Polymerschaum und der Platzhalter für den Kanal verdampft sind,
- Fig. 13 -: ein Ausführungsbeispiel einer erfindungsgemässen Verdunstervorrichtung mit mehreren erfindungsgemässen Keramikplatten,
- Fig. 14 -: eine schematische Darstellung der Verdunstervorrichtung aus Fig. 13 zur Veranschaulichung der Verstellbarkeit der Verdunsterelemente zwischen verschiedenen Endpositionen und
- Fig. 15 -: eine erfindungsgemässe Keramikplatte mit einer stark vergrösserten Detailansicht der Poren und Keramikwandungen.

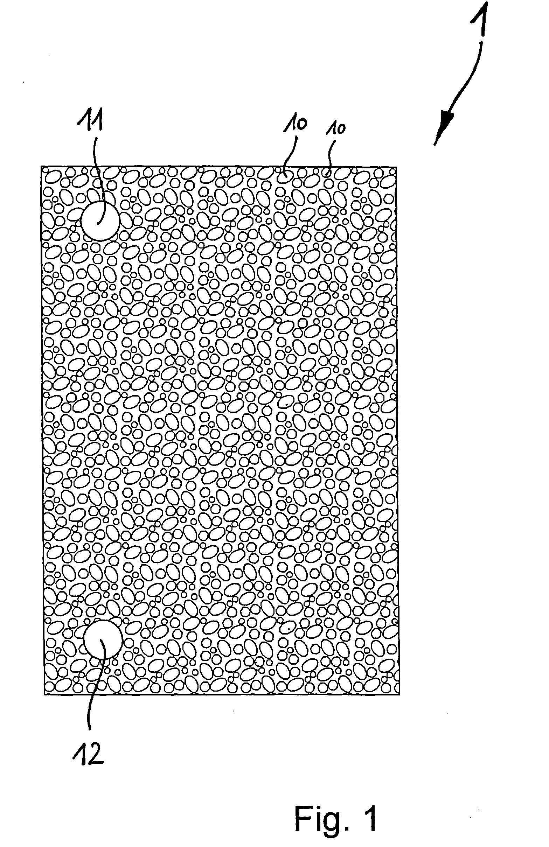

In **Fig. 1** erkennt man eine Aufsicht auf ein Ausführungsbeispiel einer erfindungsgemässen Keramikplatte 1. Zu erkennen sind in diesem Ausführungsbeispiel die offenporige Struktur durch die Andeutung einer Vielzahl grober Poren 10, durch die ein Luftstrom hindurch strömen kann. Dabei kann, wie eingangs bereits erläutert, im Luftstrom Befeuchtungsflüssigkeit, z.B. Wassertröpfchen, aufgenommen werden (Verdunstung). Zu erkennen sind in Fig. 1 ferner ein Einlass 11 sowie ein Auslass 12, durch welche hindurch die Befeuchtungsflüssigkeit ins Innere der Keramikplatte eingebracht bzw. daraus abgeleitet werden kann. Es ist grundsätzlich nicht zwingend, dass ein Auslass 12 vorgesehen ist, jedoch aus den oben bereits erwähnten Gründen vorteilhaft.

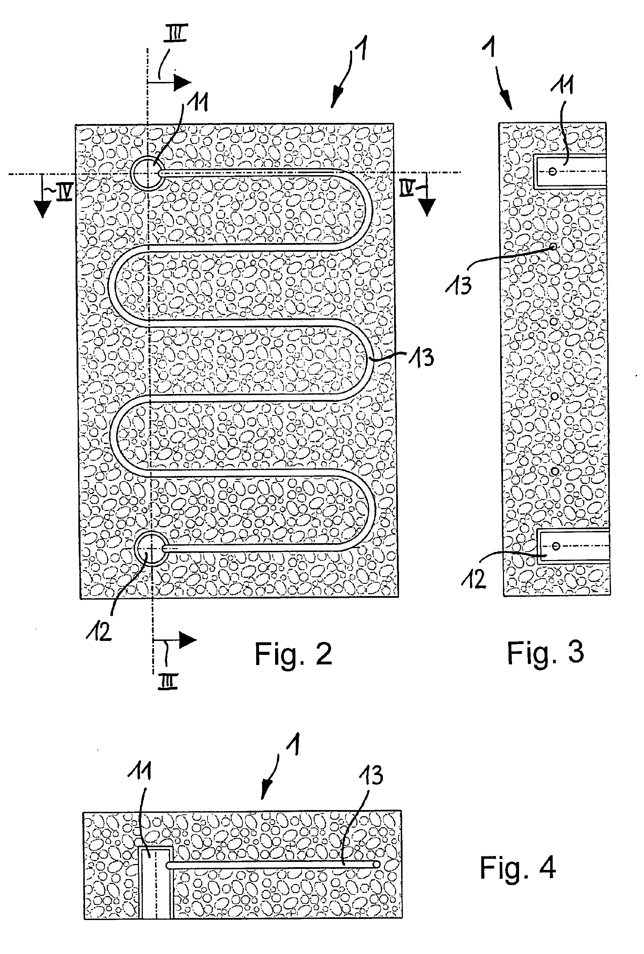

**Fig. 2** zeigt einen Längsschnitt durch die Keramikplatte 1 aus Fig. 1. In diesem Längsschnitt erkennt man, dass sich vom Einlass 11 aus ein mäanderförmig verlaufender Kanal 13 durch das Innere der Keramikplatte 1 bis hin zum Auslass 12 erstreckt. Durch den Einlass 11 hindurch kann die Befeuchtungsflüssigkeit in den Kanal 13 und damit ins Innere der Keramikplatte 1 eingebracht werden. Aus dem Kanal 13 muss dann die Befeuchtungsflüssigkeit noch durch das keramische Material hindurch auf die Oberfläche der Wandungen der Poren 10 gelangen, damit es dort in dem die offenporige Struktur durchströmenden Luftstrom aufgenommen werden kann (Verdunstung).

**Fig. 3** und **Fig. 4** zeigen Schnittdarstellungen entsprechend den Linien III-III und IV-IV aus Fig. 2. Der Einlass 11 und der Auslass 12 können dabei ein Innengewinde aufweisen, sodass an einer Anschlussleitung oder einem Anschlussschlauch (nicht dargestellt) zum Zuführen bzw. Abführen der Befeuchtungsflüssigkeit ein entsprechendes Gewindestück vorgesehen werden kann, um die Anschlussleitung bzw. den Anschlussschlauch auf einfache Weise mit dem Einlass 11 bzw. dem Auslass 12 verbinden zu können.

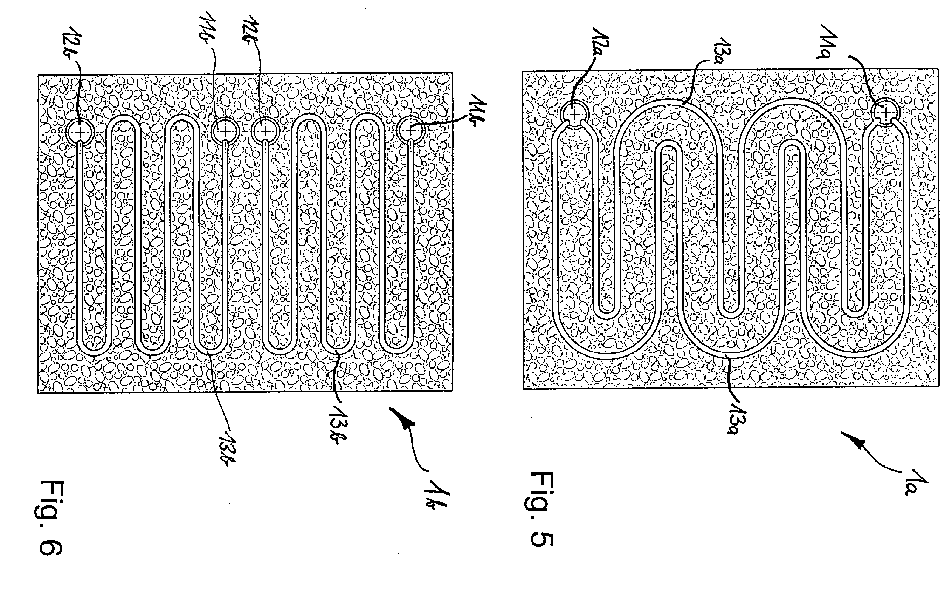

**Fig. 5** zeigt ein weiteres Ausführungsbeispiel der erfindungsgemässen Keramikplatte 1a im Längsschnitt. Zwischen dem Einlass 11a und dem Auslass 12a sind bei diesem Ausführungsbeispiel zwei mäanderförmige verlaufende Kanäle 13a vorgesehen, durch welche die Befeuchtungsflüssigkeit transportiert wird. Der Einlass 11a und der Auslass 12a sind jeweils für beide Kanäle 13a gemeinsam. Mit einer derart ausgebildeten Keramikplatte 1a kann eine noch bessere Verteilung der Befeuchtungsflüssigkeit in der offenporigen Struktur der Keramikplatte 1a erreicht werden.

**Fig. 6** zeigt ein weiteres Ausführungsbeispiel der erfindungsgemässen Keramikplatte 1b. Bei diesem Ausführungsbeispiel sind zwei separate Einlässe 11b und zwei separate Auslässe 12b vorgesehen, und vom jeweiligen Einlass 11b zum jeweiligen Auslass 12b erstreckt sich - erneut mäanderförmig verlaufend - jeweils ein separater Kanal 13b. Bei einer derart ausgebildeten Keramikplatte 1b können die verschiedenen Bereiche der Keramikplatte (hier: oberer bzw. unterer Bereich) getrennt mit Befeuchtungsflüssigkeit versorgt werden, sodass man hier auch die zugeführte Menge an Befeuchtungsflüssigkeit bereichsweise steuern kann.

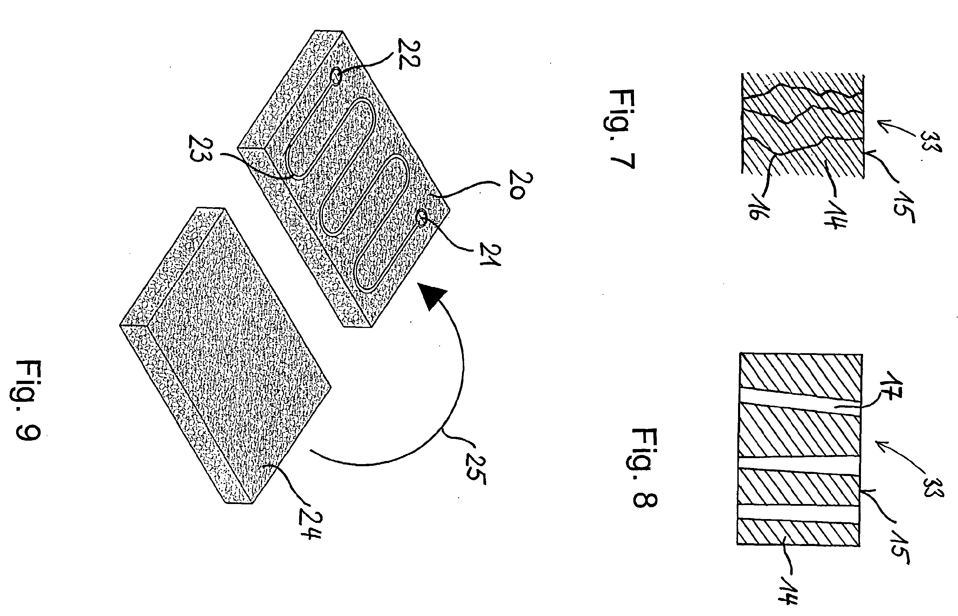

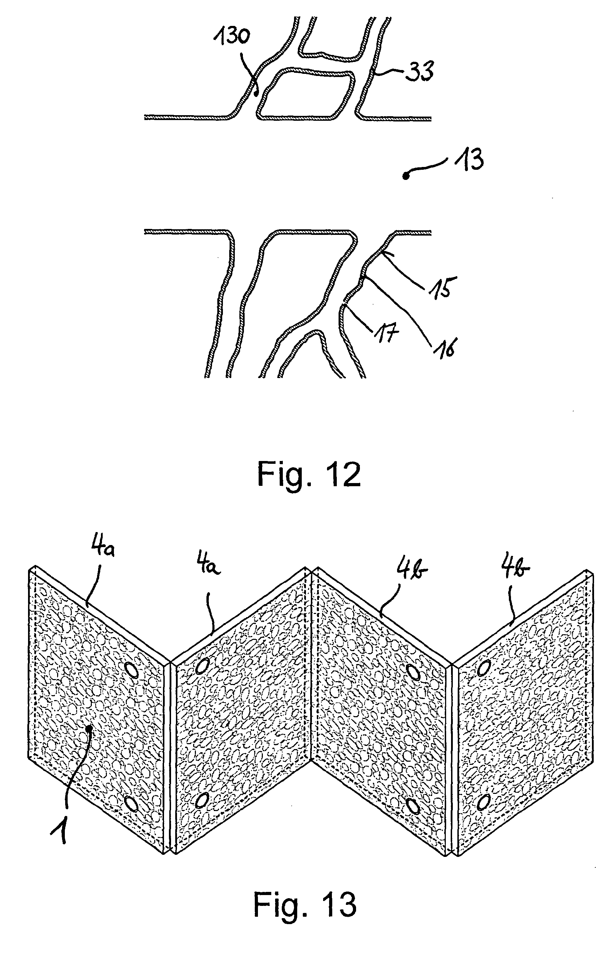

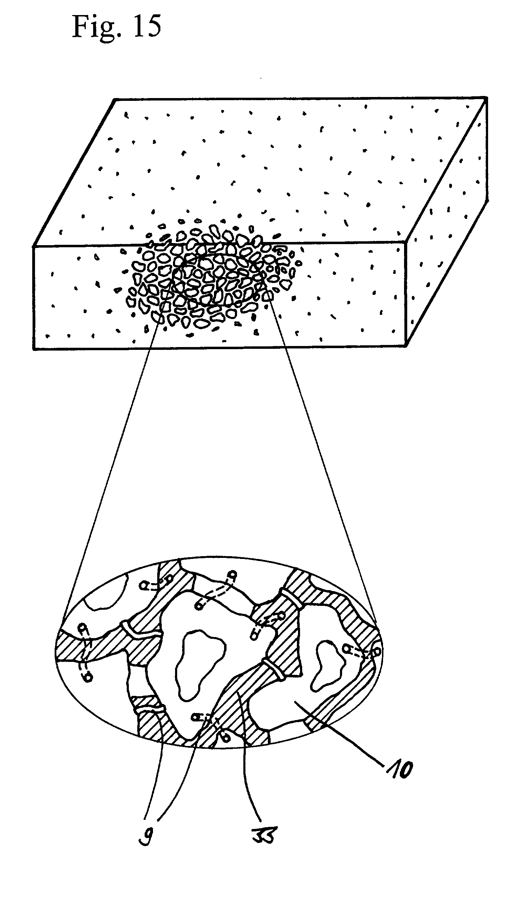

**Fig. 7** und **Fig. 8** zeigen jeweils einen Ausschnitt aus einer Wandung 33 der porösen Keramikstruktur der offenporigen Keramikplatte, wie sie am besten in den **Fig. 12** und **15** ersichtlich ist. Damit die Befeuchtungsflüssigkeit im Luftstrom aufgenommen werden kann (Verdunstung), muss sie aus dem Innern der Keramikplatte 1 (bzw. 1a oder 1b) durch das keramische Material 14 hindurch auf die Oberfläche 15 der Wandungen der offenporigen Struktur der Keramikplatte gelangen. Dies ist deshalb möglich, weil die Keramik porös ausgebildet ist. Das heisst, dass die Flüssigkeit entweder auf unregelmässig verlaufenden Wegen 16 (**Fig. 7**) oder durch diskret ausgebildete feinste Kanäle 17 (**Fig. 8**) hindurch auf die Oberfläche 15 der Wandungen der offenporigen Struktur gelangt, wo die Flüssigkeit vom Luftstrom aufgenommen werden kann (Verdunstung). Diese unregelmässig verlaufenden Wege bzw. die feinsten Kanäle, welche feine Poren in den Keramikwandungen 33 bilden, werden bei der Herstellung der Keramikplatte in dem keramischen Material gebildet, wie weiter unten noch erläutert wird.

Anhand der Fig. 9-12 wird im folgenden eine Variante des erfindungsgemässen Verfahrens zur Herstellung einer erfindungsgemässen Keramikplatte beschrieben. Dazu werden mehrere Teile - in der hier beschriebenen Verfahrensvariante (**Fig. 9**) zwei Hälften 20 bzw. 24 - aus einem offenporigen Schaum, z.B. aus einem elastischen Polymerschaum wie z.B. Polyurethan, bereit gestellt. Zwischen die beiden Hälften 20 und 24 wird ein Platzhalter 23 für den zu bildenden Kanal eingelegt, der beispielsweise ebenfalls aus dem genannten elastischen Polymerschaum hergestellt sein kann und als Vollkörper oder hohl ausgebildet ist. In der Hälfte 20 sind ferner Aussparungen 21,22 für den Eingang 11 und den Ausgang 12 (siehe z.B. Fig. 2) der Keramikplatte 1 vorgesehen. Beim Zusammenfügen (Pfeil 25) der beiden Hälften 20 und 24 wird der Platzhalter 23 für den Kanal 13 von den beiden Hälften 20 und 24 umschlossen und drückt sich in den elastischen Polymerschaum hinein.

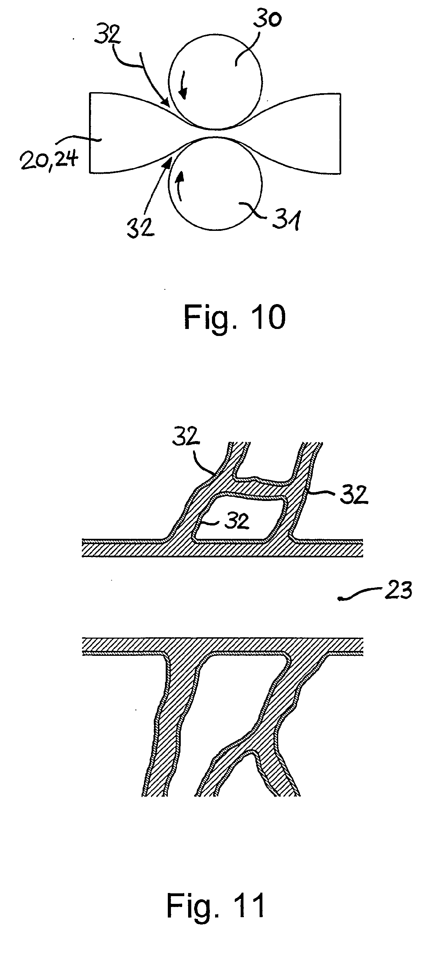

Nach dem Zusammenfügen der beiden Hälften 20 und 24 wird auf die Wandungen des Polymerschaums das Keramikrohmaterial aufgebracht. Dies kann beispielsweise derart erfolgen, wie es in **Fig. 10** dargestellt ist. Die zusammengefügten Hälften 20 und 24 aus Polymerschaum mit dem eingeschlossenen Platzhalter 23 für den Kanal werden zwischen zwei Walzen 30 und 31 hindurch transportiert. Dabei werden die beiden Hälften 20 und 24 zusammengedrückt. Gleichzeitig wird das Keramikrohmaterial 32 auf den Polymerschaum aufgebracht. Das Keramikrohmaterial (z.B. für eine Aluminiumoxidkeramik) liegt dabei in fliessfähigem Zustand vor, insbesondere in Form einer Keramiksuspension. Das Keramikrohmaterial 32 wird in den Polymerschaum hineingepresst und so auf die Wandungen des Polymerschaums sowie auf die Aussenfläche des Platzhalters 23 für den Kanal aufgebracht. Der in **Fig. 11** gezeigte Ausschnitt zeigt diesen Zustand, in welchem der Polymerschaum mit dem eingelegten Platzhalter 23 für den Kanal bereits mit Keramikrohmaterial 32 beschichtet ist, noch einmal deutlich.

Danach kann sich eine Trocknungsphase anschliessen. Sodann erfolgt eine Beaufschlagung dieses Halbzeugs mit Wärme, beispielsweise kann das zuvor beschriebene Halbzeug in einen Ofen eingebracht werden, wobei dann die Keramik bei einer Temperatur von etwa 1300°C (für eine Aluminiumoxidkeramik) gebrannt wird. Dabei brennt und gast der Polymerschaum der beiden Hälften 20 und 24 sowie der Platzhalter 23 für den Kanal aus. Bei diesem Vorgang werden die unregelmässig verlaufenden Wege 16 (**Fig. 7**) und/oder die diskreten feinsten Kanäle 17 (**Fig. 8**) in dem keramischen Material gebildet, durch die dann im Betrieb die in den Kanal 13 eingebrachte Befeuchtungsflüssigkeit auf die Oberfläche 15 der Wandungen 33 der offenporigen Struktur der Keramikplatte 1 gelangen kann.

In dem in **Fig. 12** gezeigten Ausschnitt ist dieser Zustand gut zu erkennen. Sowohl der Platzhalter als auch der Polymerschaum sind vollständig entfernt und es verbleibt die fertige Keramikplatte. Dabei erkennt man, dass dabei auch eine Vielzahl von Kapillaren 130 entstehen, die mit dem Kanal 13 in Verbindung stehen, sodass die in den Kanal 13 eingebrachte Flüssigkeit über diese Kapillaren 130 in "entlegene" Bereiche der Keramikplatte 1 und über die unregelmässig verlaufenden Wege 16 und/oder die diskreten feinsten Kanäle 17 in den Wandungen 33 der Kapillaren 130 und des Kanals 13 auf die Oberfläche 15 der Wandungen 33 gelangen kann.

Der Kanal 13 der Keramikplatte kann beispielsweise einen Durchmesser im Bereich von 1-20 mm, vorzugsweise im Bereich von 4-10 mm aufweisen, während der Durchmesser der Kapillaren beispielsweise im Bereich von einigen Hundertstel bis einigen Zehntel Millimeter liegen kann. Die Dicke der Wandungen 33 der Keramik kann beispielsweise im Bereich von 0.1 mm bis 1.5 mm liegen, vorzugsweise im Bereich von 0.2 mm bis 0.6 mm.

In **Fig. 13** ist ein Ausführungsbeispiel einer erfindungsgemässen Verdunstervorrichtung 4 mit mehreren Verdunsterelementen 4a,4b zu erkennen. Die einzelnen Verdunsterelemente 4a,4b umfassen hier jeweils eine erfindungsgemässe Keramikplatte 1, wie sie vorstehend beschrieben wurde. Ein Verdunsterelement 4a,4b kann aber auch mehr als eine solche Keramikplatte 1 umfassen. Es ist möglich, mindestens eines der Verdunsterelemente 4a,4b in eine den Strömungsquerschnitt der Befeuchtungsstrecke mindestens teilweise freigebende Position zu verstellen. Bei dem in Fig. 13 dargestellten Ausführungsbeispiel sind die Verdunsterelemente 4a und 4b in eine solche den Strömungsquerschnitt freigebende Position verstellbar, wie noch erläutert wird.

Die Verdunsterelemente 4a und 4b sind in Fig. 13 in einer V-förmigen, den Strömungsquerschnitt ausfüllenden Anordnung dargestellt. Aus dieser V-förmigen Position können die Verdunsterelemente 4a und 4b in eine Position verstellt werden, in der die einzelnen Verdunsterelemente 4a und 4b zur Strömungsrichtung des Luftstroms parallel ausgerichtet sind.

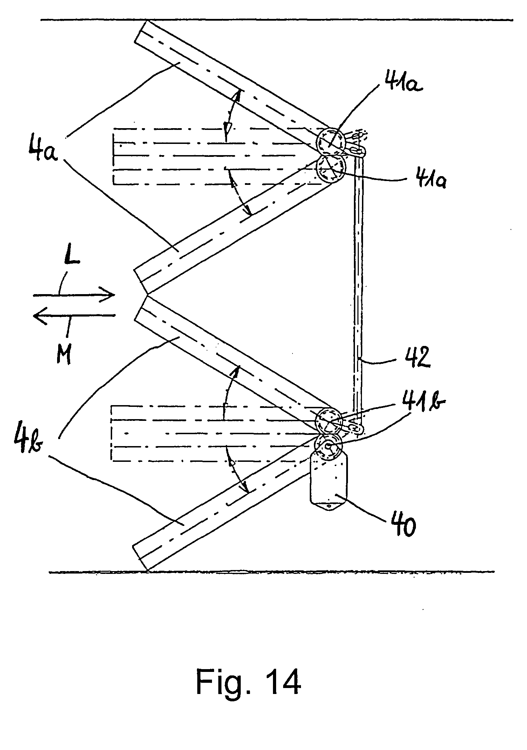

Diese Position, in der die Verdunsterelemente 4a und 4b den Strömungsquerschnitt freigeben, ist in **Fig. 14** strichpunktiert angedeutet. Das Verstellen der Verdunsterelemente 4a und 4b kann beispielsweise mit Hilfe eines Stellantriebs 40 erfolgen. Bei Betätigung des Stellantriebs 40 werden die Verdunsterelemente 4b um die vertikalen oder horizontalen Drehachsen 41b gedreht. Durch Verschieben einer Verbindungsstange 42 wird die Drehung auf die Verdunsterelemente 4a übertragen, die sich dadurch um die vertikalen oder horizontalen Drehachsen 41a drehen. Bei Bedarf können mit einer verlängerten Verbindungsstange 42 auch noch weitere Verdunsterelemente verstellt werden. Die Pfeile L,M zeigen die beiden möglichen Luftströmungsrichtungen an.

**Fig. 15** zeigt eine erfindungsgemässe Keramikplatte mit einer offenporigen Struktur aus porösen Keramikwandungen 33. Bei dem dargestellten Ausführungsbeispiel sind zwischen einer Vielzahl offener, grober Poren 10, durch die ein Luftstrom hindurch strömen kann, Keramikwandungen 33 angeordnet. Die Keramikwandungen 33 sind porös ausgebildet, d.h. sie weisen eine Vielzahl kapillarartiger feiner Poren 9 auf, die den unregelmässig verlaufenden Wegen 16 von **Fig. 7** bzw. den feinsten Kanälen 17 von Fig. 8 entsprechen und die Keramikwandungen 33 hydrophiler machen.

Die offenen, groben Poren 10 haben einen Durchmesser im Bereich von vorzugsweise 2 mm bis 20 mm, noch bevorzugter 2 mm bis 5 mm, während die feinen Poren 9 einen Durchmesser im Bereich von vorzugsweise 5 µm bis 1000 µm, noch bevorzugter 50 µm bis 200 µm aufweisen. Die Dicke der Keramikwandungen 33 liegt beispielsweise im Bereich von 0.1 mm bis 1.5 mm, vorzugsweise im Bereich von 0.2 mm bis 0.6 mm. Pro cm² Keramikwandung 33 sind vorzugsweise etwa 10 bis 50 feine Poren 9 vorhanden.

## Patentansprüche

1. Keramikplatte (1;1a;1b) zur Befeuchtung eines Luftstroms mit einer Befeuchtungsflüssigkeit, welche Keramikplatte (1;1a;1b) eine offenporige Struktur aus porösen Keramikwandungen (33) aufweist, aus der die Befeuchtungsflüssigkeit von dem hindurch strömenden Luftstrom aufgenommen wird, **dadurch gekennzeichnet, dass** in der Keramikplatte (1;1a;1b) mindestens ein sich im Innern der Keramikplatte erstreckender Kanal (13;13a;13b) vorgesehen ist, der eine direkt durch eine Keramikwandung (33) der offenporigen Struktur gebildete poröse Wandung sowie einen Einlass (11;11a;11b) zum Einbringen der Befeuchtungsflüssigkeit in den Kanal (13;13a;13b) und damit ins Innere der Keramikplatte (1;1a;1b) aufweist.

2. Keramikplatte nach Anspruch 1, **dadurch gekennzeichnet, dass** im Innern der Keramikplatte (1;1a;1b) eine Vielzahl von Verteiler-Kapillaren (130) vorhanden ist, welche mit dem Kanal (13;13a;13b) verbunden sind, in welchen die Befeuchtungsflüssigkeit eingebracht wird.

3. Keramikplatte nach einem der Ansprüche 1 oder 2, **dadurch gekennzeichnet, dass** die offenporige Struktur poröse Wandungen (33) mit einer Dicke im Bereich von 0.1 mm bis 1.5 mm, vorzugsweise im Bereich von 0.2 mm bis 0.6 mm, aufweist.

4. Keramikplatte nach einem der vorangehenden Ansprüche, **dadurch gekennzeichnet, dass** der Kanal (13;13a;13b) ferner einen Auslass (12;12a;12b) aufweist.

5. Keramikplatte nach einem der vorangehenden Ansprüche, **dadurch gekennzeichnet, dass** im Innern der Keramikplatte mehrere Kanäle (13a;13b) vorgesehen sind.

6. Keramikplatte nach einem der vorangehenden Ansprüche, **dadurch gekennzeichnet, dass** der Kanal (13) bzw. die Kanäle (13a;13b) mäanderförmig im Innern der Keramikplatte verlaufen.

7. Verdunstervorrichtung zur Befeuchtung eines durch eine Befeuchtungsstrecke strömenden Luftstroms, wobei die Verdunstervorrichtung sich zumindest grösstenteils über den Strömungsquerschnitt der Befeuchtungsstrecke erstreckt und ein oder mehrere Verdunsterelemente (4a,4b) aufweist, **dadurch gekennzeichnet, dass** das Verdunsterelement bzw. die Verdunsterelemente (4a,4b) jeweils mindestens eine Keramikplatte (1;1a;1b) gemäss einem der vorangehenden Ansprüche umfassen.

8. Verdunstervorrichtung nach Anspruch 7, **dadurch gekennzeichnet, dass** das oder mindestens eines der Verdunsterelemente (4a,4b) in eine den Strömungsquerschnitt der Befeuchtungsstrecke mindestens teilweise freigebende Position verstellbar ist.

9. Verdunstervorrichtung nach Anspruch 6, **dadurch gekennzeichnet, dass** mehrere Verdunsterelemente (4a,4b) zwischen einer V-förmigen, den Strömungsquerschnitt ausfüllenden Anordnung und einer Anordnung verstellbar sind, in der die einzelnen Verdunsterelemente (4a,4b) zur Strömungsrichtung (L,M) des Luftstroms parallel ausgerichtet sind.

10. Verfahren zur Herstellung einer Keramikplatte (1) nach einem der Ansprüche 1 bis 6, **dadurch gekennzeichnet, dass** zwischen mehrere Teile (20,24) aus einem offenporigen Schaum ein Platzhalter (23) für einen Kanal (13) eingelegt wird, dass dann die Teile (20,24) derart zusammengefügt werden, dass sie den Platzhalter (23) für den Kanal (13) umschliessen, bei welchem Verfahren dann auf die Wandungen des offenporigen Schaums und auf die Aussenfläche des Platzhalters (23) für den Kanal ein Keramikrohmaterial (32) aufgebracht wird, und bei welchem Verfahren schliesslich der offenporige Schaum zusammen mit dem Platzhalter (23) für den Kanal während des Brennens der Keramik verdampft wird und so die Keramikplatte (1) gebildet wird.

11. Verfahren nach Anspruch 10, **dadurch gekennzeichnet, dass** der offenporige Schaum ein elastischer Polymerschaum ist, und dass das Keramikrohmaterial (32) auf die Wandungen des Polymerschaums und auf die Aussenfläche des Platzhalters (23) für den Kanal (13) aufgebracht wird, indem der elastische Polymerschaum zwischen zwei Walzen (30,31) transportiert wird und dabei zwischen den Walzen zusammengedrückt wird, wodurch das Keramikrohmaterial (32) in den Polymerschaum hineingepresst wird und so auf die Wandungen des Schaums sowie auf die Aussenfläche des Platzhalters (23) für den Kanal (13) aufgebracht wird.

12. Verfahren nach Anspruch 10, **dadurch gekennzeichnet, dass** der offenporige Schaum ein elastischer Polymerschaum ist, in eine Keramiksuspension getaucht, anschliessend gewalkt und schliesslich durch Durchführen und Zusammendrücken zwischen zwei Walzen von überschüssiger Keramiksuspension befreit wird.
